# EUROPEAN PATENT APPLICATION

(11) **EP 4 847 373 A1**
(43) Date of publication of application: **02.12.2026**
(21) Application number: 26173776.1
(22) Date of filing: 21.04.2026
(51) Int. Cl.: B64C 3/56, B64C 3/40, B64C 23/06

(54) **AIRCRAFT WING STRUCTURE**

(30) Priority: 27.05.2025 GB 202508220
(71) Applicant: Airbus Operations Ltd, Filton, Bristol BS34 7PA (GB)
(72) Inventor: MORRELL, Paul, Bristol, BS34 7PA (GB); HIPKISS, Richard, Bristol, BS34 7PA (GB); HAND, Matthew, Bristol, BS34 7PA (GB); PALMER, Scott, Bristol, BS34 7PA (GB)
(74) Representative: Abel & Imray LLP

(57) **Abstract**

The invention relates to an aircraft wing assembly, the aircraft wing assembly comprising a fixed wing and a wing tip. The wing tip device is configurable between: (i) a flight configuration for use during flight and (ii) a ground configuration for use during ground-based operations. In the ground configuration the span of the aircraft wing assembly is reduced. An actuation assembly comprising a plurality of actuation components is arranged to facilitate and control the rotation of the wing tip device between the flight configuration and ground configuration. A mounting framework is provided, wherein at least two actuation components of the actuation assembly are mounted to the mounting framework.

## Description

### BACKGROUND OF THE INVENTION

The present invention concerns an aircraft wing assembly comprising a wing tip device configurable between a flight configuration and a ground configuration.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Movable wing tip devices have therefore been introduced into passenger aircraft whereby a wing tip device is movable between a flight configuration for use during flight and a ground configuration for use during ground-based operations. In the flight configuration, the wing tip device forms an extension of the wing and contributes to the lift generated by the wing. In the ground configuration, the wing tip device is moved away from the flight configuration such that the effective span of the aircraft wing is reduced, thereby allowing use of existing gates and taxiways. Such an arrangement is sometimes referred to as a 'folding wing tip'.

Folding wing tip arrangements by necessity involved a number of moving parts and usually at least one actuator for controlling the movement of the moving parts. The structural complexity of the arrangements may present challenges when manufacturing an aircraft wing, potentially due to packaging constraints within the wing, and/or due to accessibility of the space in which the various components are housed.

Aspects of the present invention seek to mitigate one or more of the above-mentioned challenges. Alternatively, or additionally, aspects of the present invention seek to provide an improved aircraft wing assembly, an improved aircraft wing, and an improved aircraft.

### SUMMARY OF THE INVENTION

The present invention provides, according to a first aspect, an aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and an actuation assembly comprising a plurality of actuation components arranged to facilitate and control the rotation of the wing tip device between the flight configuration and ground configuration, and a mounting framework, wherein at least two actuation components of the actuation assembly are mounted to the mounting framework.

Provision of a mounting framework may simplify the manufacture and/or maintenance of the aircraft wing assembly, for example by making some or all of the actuation components easier to mount during manufacture, and/or easier to remove, repair, and/or replace during maintenance procedures.

The mounting framework may function as support mechanism to an actuation component during the mounting of the actuation component to the mounting framework. For example, the mounting framework may comprise a common rail system to which an actuation component can be mounted, such that the weight of the actuation component is supported by the common rail system. The component may then be slid along the rail into the desired location, before being securely fastened in that location. The actuation component may be securely fastened by any suitable fastener or fastening mechanism, as would be understood by the skilled person. Such an arrangement may be advantageous when the actuation component is relatively heavy and as such difficult for a fitter to hold overhead during the fitting process. Such an arrangement may also be advantageous when the actuation component is being installed in a location difficult for a fitter to access, for example because other aircraft wing assembly components are obstructive. In addition to supporting the actuation component, the mounting framework may guide the actuation component into the correct installation position during manufacture of the aircraft wing assembly.

The mounting framework may comprise a guide rail system. The guide rail system may comprise a guide slot, for example a T-slot. The guide rail system may further comprise a guide mount which may be coupled with the guide slot, such that the physical interaction between the guide slot and guide mount serves to positionally control and constrain the movement of the guide mount in most degrees of freedom. The guide rail system may comprise open ends allowing suitably configured guide mounts to be inserted into the guide slot, and/or comprise one or more access apertures allowing suitably configured guide mounts to be inserted into the guide slot. The guide mounts may be form part of, or extend from, an actuation component. The guide slot may be T-shaped in cross-section, or may be any other suitable cross-section that provides the positional control and constraint as described. For example, the guide slot or guide mount may be circular in cross-section.

The mounting framework may be located within the fixed wing. The fixed wing may comprise an upper wing cover and a lower wing cover, and may comprise structural elements such as spars or ribs. The mounting framework may be mechanically connected to and supported by the upper wing cover, a spar, and/or a rib. The mounting framework may be at least partially isolated from flight loads. Such loads may be significant, and by at least partially isolating the mounting framework from flight loads the actuation components may also be at least partially isolated from flight loads. This may reduce the mechanical stress on the actuation components, and may increase reliability of those components, and/or allow remove or reduce a design constraint on those components. The mounting framework may be connected to and supported by aircraft wing components in such a way that flight loads, for example wing bending loads, experienced by the aircraft wing are reduced. The skilled person will be knowledgeable of various conventional mechanisms for providing such connections. The mounting framework may be located within a dry rib bay of the fixed wing.

The mounting framework may comprise one or more structural components, and extend in one or more directions. The framework may comprise a structural component welded, bolted, or otherwise mechanically fastened to at least one other structural component. The structural components may be one or more of rods, rails, solid, or hollow. The mounting framework may comprise any material with the suitable properties, for example, aluminium or composite materials.

The lower wing cover may comprise a removable access plate, the removable access plate covering an access aperture in the lower wing cover. The access plate may be removed during the manufacture or maintenance of the wing, and allow a fitter or engineer to access the actuation components within the wing. The mounting framework may be configured to allow a fitter to connect an actuation component to the framework in the vicinity of the access aperture and then move the actuation component to the, different, position in which the actuation component is to be secured.

The actuation components may be one or more of a motor, gearbox, motor control unit, value control unit, or power delivery unit. Further possible actuation components are listed below, and may comprise any components which are involved in the movement of the wing tip device between the flight configuration and ground configuration, including those components potentially used to lock the wing tip device in position.

The wing assembly may comprise a hinge assembly connecting the outboard wing section to the fixed wing. The hinge assembly may comprise a fore set of interleaving lugs and an aft set of interleaving lugs. An actuator may be located between the fore set of lugs and the aft set of lugs. The actuator may be attached between the fixed wing and the outboard wing section. The attachment may be such that rotation of the actuator rotates the outboard wing section, relative to the fixed wing.

The actuator may comprise an output member arranged to rotate about the axis of rotation of the actuator. The actuator may be a rotary actuator. The actuator may be driven by a remote motive force (for example the actuator may be driven by a remote motor, via a transmission). The actuator may be a geared rotary actuator (GRA).

The wing may further comprise: a latch assembly, located in the fixed wing and inboard of the actuator; a fore latching arm associated with the outboard wing section; and an aft latching arm associated with the outboard wing section, the latch assembly and the fore and aft latching arms being configured such that when the wing is in the flight configuration, the fore latching arm extends fore of the latch assembly and the aft latching arm extends aft of the latch assembly such that the latch assembly is between the latching arms. The latch assembly may comprise an aft latch pin, deployable in the aft direction to latch the aft latching arm, and a fore latch pin, deployable in a forward direction, to latch the fore latching arm, such that when the wing is in the flight configuration and the fore and aft latch pins are deployed, the outboard wing section is latched to the fixed wing.

Unless otherwise specified, the terms 'fore' and 'aft' are used herein to specify relative locations, along a direction parallel to the hinge axis. Unless otherwise specified, there terms 'inboard' and 'outboard' are used herein to specify relative locations, along a direction perpendicular to the hinge axis.

In some embodiments, the hinge axis may be toed in or out. In preferred embodiments, the hinge axis may be orientated substantially in a line-of-flight direction. In such embodiments the terms fore/aft and inboard/outboard are also commensurate with the relative locations, in the line-of-flight direction and the spanwise direction respectively.

According to a second aspect of the invention, there is provided an aircraft wing comprising the aircraft wing assembly of the first aspect of the invention.

According to a third aspect of the invention, there is provided an aircraft comprising the aircraft wing of the second aspect of the invention, or aircraft wing assembly of the first aspect of the invention.

According to a fourth aspect of the invention there is also provided a method of installing an actuation component in an aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, the aircraft wing assembly further comprising a mounting framework for mounting at least two actuation components, the method comprising the step of engaging the actuation component with the mounting framework, and securing the actuation component to the mounting framework. The actuation component may be arranged to facilitate and control the rotation of the wing tip device between the flight configuration and ground configuration

The mounting framework may comprise a guide rail system with a guide slot. The actuation component may comprise a guide mount. The method may comprise engaging the guide mount of the actuation component with the guide slot of the rail system.

According to a fifth aspect, the invention provides a method performing maintenance tasks on an aircraft wing assembly according to the first aspect of the invention, the method comprising the step of removing at least one actuation component from the mounting framework.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3a and 3b are isometric views showing the joint between the fixed wing and the outboard wing section of Figure 1;Figures 4a and 4b show a plan view of a section of the aircraft wing according to an embodiment of the invention; and
Figure 5 is a cross-sectional view of a mounting rail as may be used in an embodiment of the invention.

### DETAILED DESCRIPTION

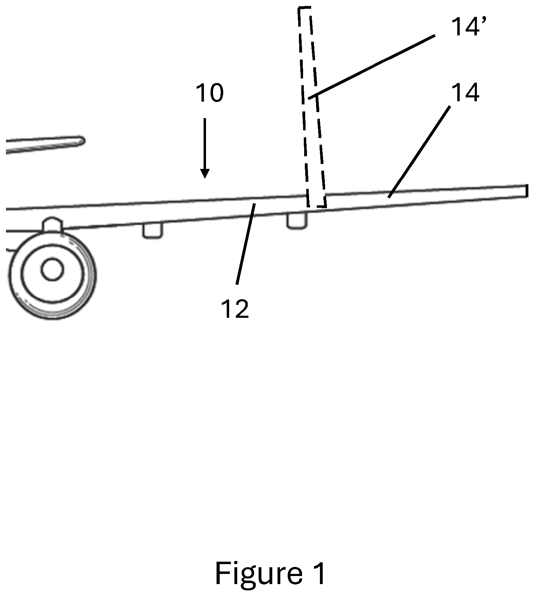

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

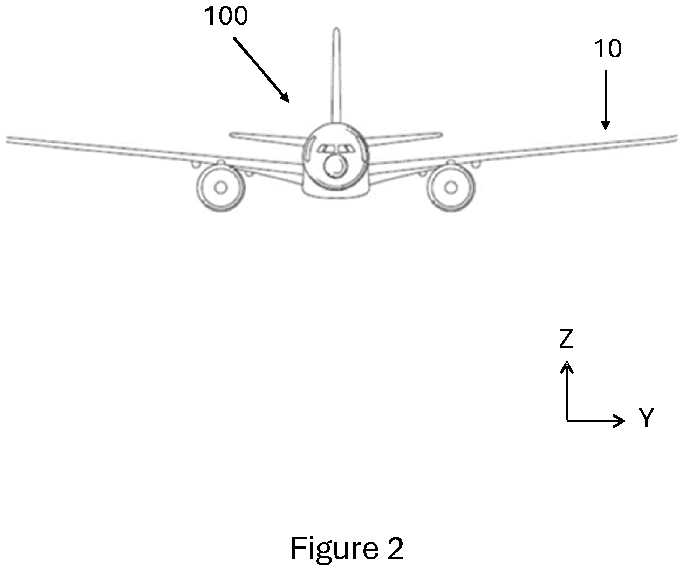

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

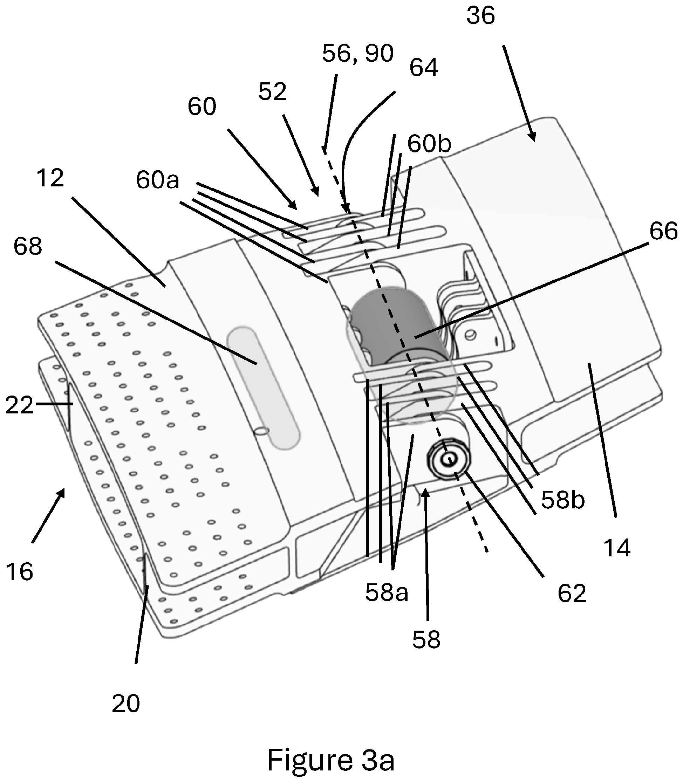

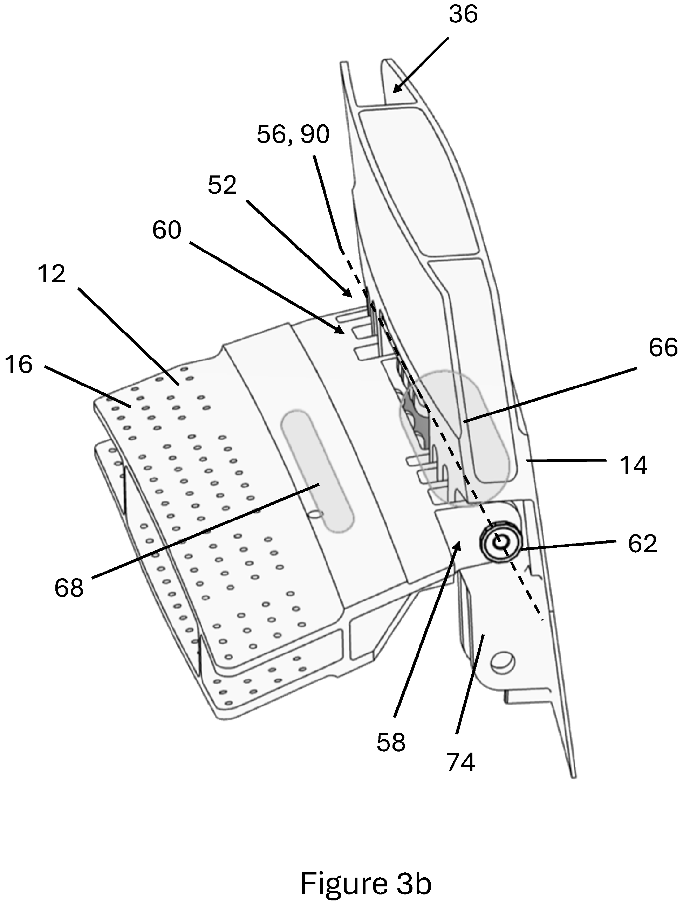

Figures 3a and 3b are isometric views showing the joint between the fixed wing 12 and the outboard wing section 14, when the wing is in the flight configuration (see Figure 3a) and the ground configuration (see Figure 3b). Various components, such as the wing covers, have been omitted for clarity.

Referring first to Figures 3a and 3b, the fixed wing 12 comprises a tip 16. The tip 16 of the fixed wing 12 comprises a front spar 20 and a rear spar 22 (the ends of which are shown in Figure 3a). The outboard wing section 14 comprises a root 36.

The fixed wing 12 and the outboard wing section 14 are connected via a hinge assembly 52. The hinge assembly 52 allows rotation of the outboard wing section 14, about a hinge axis 56, between the position shown in Figure 3a (when the wing is in a flight configuration), and the position shown in Figure 3b, when the wing is in the ground configuration.

In the first embodiment, the hinge axis 56 is substantially parallel to the line of flight (and thus substantially parallel to the X-direction, aligned with the longitudinal axis of the fuselage of the aircraft). In the description below, various aspects of the design are described with reference to their location in the wing. The fore-aft direction is along the X axis. The inboard-outboard direction is in the Y-axis, running perpendicular to the X-direction and extending spanwise, perpendicular to the longitudinal axis of the aircraft.

The hinge assembly 52 comprises both a fore set 58 and aft set 60 of interleaving lugs. Hinge pins 62, 64 extend through aligned holes in these fore 58 and aft 60 sets of interleaving lugs respectively, thereby forming a hinge. The holes are bushed to provide a suitable seating for the hinge pins 62, 64 and thus provide a suitable means for enabling maintenance and repair of the hinge assembly 52. The hinge pins 62, 64 are coaxial to the hinge axis 56.

The root 36 of the outboard wing section 14, comprises a set of three fore lugs 58b interleaving with a corresponding set of four fore lugs 58a on the fixed wing 12 (in some of the Figures only some of the lugs may be labelled for clarity). Similarly, the root of the outboard wing section 14 comprises a set of three aft lugs 60b interleaving with a corresponding set of four aft lugs 60a on the fixed wing 12. The fore lugs 58a, 58b and aft lugs 60a, 60b are integrally formed with the respective parts of the fixed wing and outboard wing sections.

The fore lugs 58a of the fixed wing 12 are connected to the fore lugs 58b of the outboard wing section 14, and the aft lugs 60 of the fixed wing 12 are connected to the aft lugs 60b of the outboard wing section 14, for rotation relative to one another via the fore and aft hinge pins 62, 64 which pass through the holes formed in the lugs 58, 60.

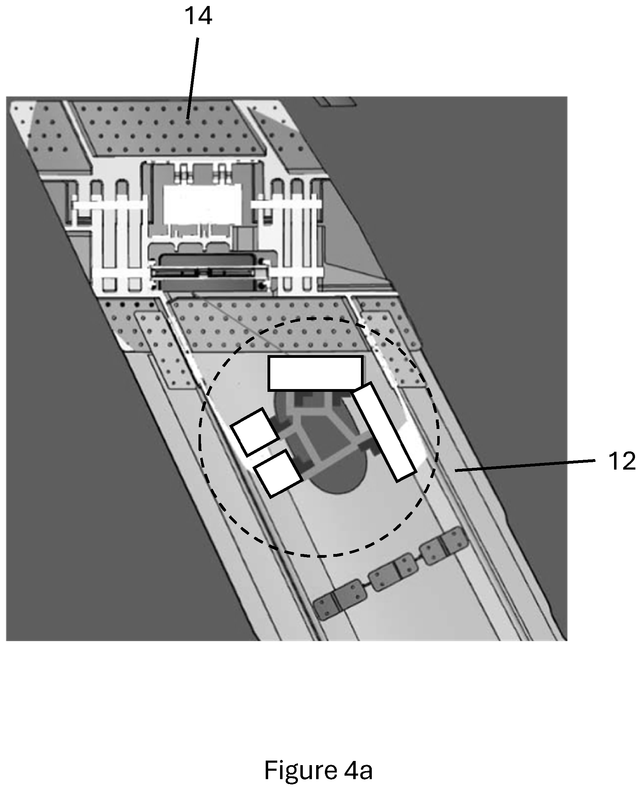

The hinge assembly 52 also comprises a geared rotary actuator (GRA) 66. The GRA 66 is located between the fore and aft sets of interleaving lugs 58, 60. Its position relative to the hinge axis 56 is described in more detail below with reference to Figure 4a.

The GRA 66 has a rotary input (not shown) via a GRA transmission (not shown). The rotary input drives a planetary gearbox within the GRA 66. The GRA 66 has a series of stages, alternately connected to either the fixed wing 12 or the outboard wing section 14. The stages are rotatable about a GRA axis of rotation 90. Each stage comprises an integral arm extending towards the respective part of the wing. The inboard arm is fixedly attached to an inboard mounting bracket, and the outboard arm is fixedly attached to an outboard mounting bracket (not shown). The mounting brackets are themselves fastened to the fixed wing 12 and the outboard wing section 14. Accordingly, when the rotary input to the GRA 66 drives rotation of the stages, the outboard wing section 14 is rotated relative to the fixed wing 12.

The first embodiment of the invention also comprises a latch assembly 68. The latch assembly 68 is arranged to selectively allow or prevent the movement of the wing between the flight and ground configurations, by retracting or extending a pair of latch pins (not shown) into latching arms and latch receivers. In this respect, the outboard wing section 14 comprises a pair of fore latching arms 74 (visible in Figure 3b) and a pair of aft latching arms (not visible in Figure 3b). Each of the latching arms in the fore and aft pairs are integrally formed as an extension of corresponding fore lugs 58b or aft lugs 60b of the outboard wing section 14.

When the wing is in the flight configuration (see Figures 3a), the fore and aft latching arms extend inboard from the hinge axis 56. The latching arms interleave with a corresponding series of fore and aft latch pin receivers (not visible in the Figures). Each latch pin receiver is integrally formed as an extension of corresponding fore and aft lugs 58a, 60a of the fixed wing 12.

When the wing is in the flight configuration, each of the latching arms in the pairs of arms are sandwiched between two corresponding latch pin receivers. Each of the latching arms and each of the latch pin receivers comprise a hole. The holes all align along a common axis. The common axis is known as the latch line and extends parallel to, but inboard of, the hinge axis 56.

The latch assembly 68 is in the form of a cylindrical locking and latching unit (LLU) housed in a recess within the tip of the fixed wing. The LLU 68 comprises a fore latch pin, deployable in the forward direction, and an aft latch pin, deployable in an aft direction. The fore latch pin is moveable between a retracted position and an extended position. In the retracted position the pin is retracted into a pin housing such that the pin is fully withdrawn aft of the fore pair of latching arms 74 and the fore latch pin receivers. In the extended position the pin has been deployed in a forward direction such that it extends through the aligned holes of the fore sets of latching arms 74 and latch pin receivers. The aft latch pin is also moveable between a retracted position and an extended position. In the retracted position, the pin is fully withdrawn fore of the aft pair of latching arms and the aft latch pin receivers.

The retracted position of the latch pins allows for relative movement between the latching arms and the latch receivers. This therefore allows movement of the wing between the flight and ground configurations via actuation of the GRA 66. In contrast, when the latch pins are in the extended position, the pins inhibit the movement between the latching arms and the respective latch pin receivers, thereby latching the wing in the flight configuration and transferring loads across the joint and into the fixed wing structure.

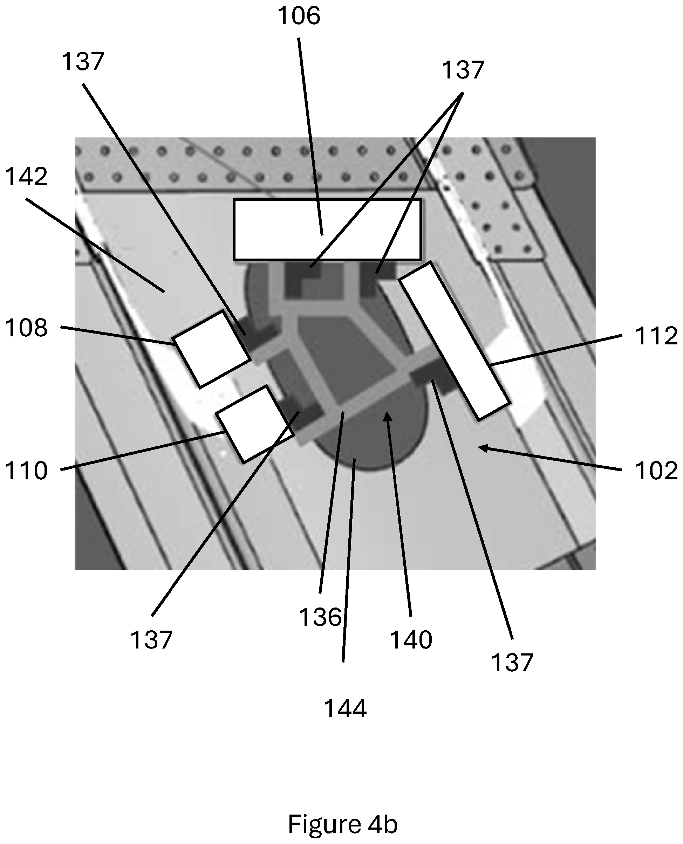

Figures 4a and 4b shows a plan view of the fixed wing 12 and wing tip device 14, with the top cover of the wing removed for illustrative purposes. Figure 4b is a magnified view of the section of the fixed wing 12 shown in a dashed circle in figure 4a. The fixed wing 14 comprises a dry rib bay 102 which is located in-board of the hinge assembly 52. Within the dry rib bay 102 is provided a mounting framework 136, which comprises a guide rail with a T-slot cross-section extending in a number of directions. The GRA 66 and LLU 68 each require a series of power and control components in order to operate as described above, thereby facilitating the movement of the wing tip device between the flight configuration and ground configuration, and locking of the wing tip device in the flight configuration. These components are actuation components, and include a power delivery unit 106 in the form of a motor for providing power to the GRA 66, first and second valve control units 108, 110 for controlling the LLU 68, and a motor control unit 112 for controlling the power delivery unit 106.

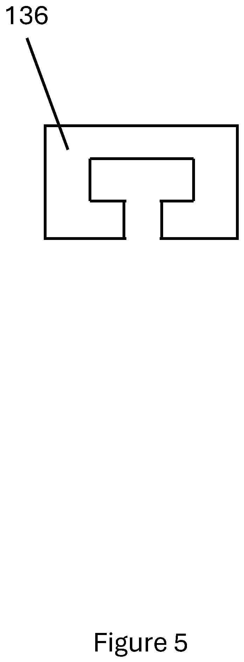

The actuation components 106, 108, 110, 112 are all mechanically fastened to and held in position in the wing, by a mounting framework 136. The mounting framework 136 is mechanically fastened to and supported by an upper wing cover of the fixed wing 12, not shown in figure 4 for clarity. As shown in figure 5, the mounting framework 136 comprises a rail with a T-slot cross-section. Each of the actuation components 106, 108, 110, and 112, include a T-mount, which is inserted into the T-slot of the mounting framework, which allows the weight of the actuation component to be supported by the mounting framework 136. At various appropriate places on the rail, there are access apertures in the T-slot, to allow easy engagement of the actuation components with the T-slot of the mounting framework. The mounting framework 136 is also open-ended, also to allow easy engagement of the actuation components with the T-slot. The mounting framework 136 comprises a plurality of brackets 137, each of the brackets positioned and configured to secure one of the actuation components to once the actuation components are properly located.

Figures 4a and 4b also show an access aperture 140, located in a lower wing cover 142 of the fixed wing 12, the access aperture 142 covered by a removable access cover 144. During manufacture of the fixed wing 12, typically the actuation components 106, 108, 110, 112, will be installed and connected to the mounting framework 36 prior to the lower wing cover 142 being in place. However, during maintenance operations, in order to access the actuation components 106, 108, 110, 112, the access cover 144 is removed from the fixed wing 12, thereby opening the access aperture 140. As can be seen in the figures, the actuation components 106, 108, 110, 112, are located towards the outer circumference of the access aperture 140. In order to improve accessibility of the actuation components, their attachment to the mounting framework 136 may be loosened, and the actuation component slid within the T-slot of the mounting framework 136 to a position more easily reachable by a technician or engineer. Maintenance operations may then be performed without fully removing the actuation component, or alternatively the actuation component can be removed before being replaced once serviced or repaired, or replaced with a new component if required.

Whilst the present invention has been described and illustrated with reference to particular embodiments, it will be appreciated by those of ordinary skill in the art that the invention lends itself to many different variations not specifically illustrated herein. For example, the guide rail and guide mount may have one of a number of suitable cross-sections, for example a circular cross-section.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, and an actuation assembly comprising a plurality of actuation components arranged to facilitate and control the rotation of the wing tip device between the flight configuration and ground configuration, and a mounting framework, wherein at least two actuation components of the actuation assembly are mounted to the mounting framework.

2. An aircraft wing assembly according to claim 1, wherein the mounting framework functions as support mechanism to an actuation component during the mounting of the actuation component to the mounting framework.

3. An aircraft wing assembly according to claim 1 or claim 2, wherein the mounting framework comprises a common guide rail system to which an actuation component can be mounted, such that the weight of the actuation component is supported by the common rail system.

4. An aircraft wing assembly as claimed in any preceding claim, wherein the mounting framework comprises a guide rail system with a guide slot.

5. An aircraft wing assembly as claimed in claim 4, wherein the guide rail system comprises one or more of an open end allowing suitably configured guide mounts to be inserted into the slot, and an access aperture allowing suitably configured guide mounts to be inserted into the guide slot.

6. An aircraft wing assembly as claimed in claim 4 or claim 5, wherein guide mounts form part of, or extend from, an actuation component mounted to the mounting framework.

7. An aircraft wing assembly as claimed in any preceding claim, wherein the mounting framework is located within the fixed wing.

8. An aircraft wing assembly as claimed in claim 7, wherein the fixed wing comprises an upper wing cover and a lower wing cover, and structural elements including spars and ribs, and the mounting framework is mechanically connected to and supported by one or more of the upper wing cover, a spar, and/or a rib.

9. An aircraft wing assembly as claimed any preceding claim, wherein the mounting framework is at least partially isolated from flight loads.

10. An aircraft wing assembly as claimed in claim 8, wherein the lower wing cover comprises a removable access plate, the removable access plate covering an access aperture in the lower wing cover and the mounting framework is configured to allow a fitter to connect an actuation component to the framework in the vicinity of the access aperture and then move the actuation component to the, different, position in which the actuation component is to be secured.

11. An aircraft wing assembly as claimed in any preceding claim, wherein the actuation components are one or more of a motor, gearbox, motor control unit, value control unit, or power delivery unit.

12. An aircraft wing comprising the aircraft wing assembly of claim 1.

13. An aircraft comprising the aircraft wing of claim 12, or aircraft wing assembly of claim 1.

14. A method of installing an actuation component in an aircraft wing assembly, the aircraft wing assembly comprising a fixed wing and a wing tip device at the tip thereof, wherein the wing tip device is configurable between: (i) a flight configuration for use during flight and (ii) a ground configuration for use during ground-based operations, in which ground configuration the wing tip device is rotated away from the flight configuration about a hinge axis such that the span of the aircraft wing assembly is reduced, the aircraft wing assembly further comprising a mounting framework for mounting at least two actuation components, the method comprising the step of engaging the actuation component with the mounting framework, and securing the actuation component to the mounting framework.

15. A method performing maintenance tasks on an aircraft wing assembly according to claim 1, the method comprising the step of removing at least one actuation component from the mounting framework.
